# EUROPEAN PATENT APPLICATION

(11) **EP 4 836 496 A1**
(43) Date of publication of application: **04.11.2026**
(21) Application number: 25173212.9
(22) Date of filing: 29.04.2025
(51) Int. Cl.: H04W 24/02, H04W 24/08

(54) **METHODS AND APPARATUSES FOR MANAGING PASSIVE INTERMODULATION IN A RADIO ACCESS NETWORK**

(71) Applicant: Deutsche Telekom AG, 53113 Bonn (DE)
(72) Inventor: ARNOLD, Paul, 61206 Wöllstadt (DE); BELSCHNER, Jakob, 60322 Frankfurt/M (DE)
(74) Representative: 2SPL Patentanwälte PartG mbB

(57) **Abstract**

The present disclosure relates to managing passive intermodulation (PIM) in a radio access network using standardized communication between a radio unit and a control unit. A first apparatus, such as an O-RU, comprises a communication module configured to receive control instructions via a management-plane (M-plane) protocol from a network control unit and to transmit data resulting from executed PIM-related operations. A processor executes the specified operation, such as measuring PIM or updating cancellation parameters. A second apparatus, such as an O-DU, comprises a processor configured to generate such control instructions and a communication module for sending them via the M-plane protocol. This architecture enables centralized coordination and monitoring of PIM-related functions using open, standards-based interfaces, thereby improving diagnostic visibility and interference mitigation in disaggregated network deployments.

## Description

### Field

The present disclosure generally relates to Radio Access Networks (RANs), and more particularly to systems and methods for managing signal quality in mobile communication architectures, such as those compliant with the Open Radio Access Network (O-RAN) specifications.

### Background

In conventional mobile network infrastructures, particularly those based on proprietary and vertically integrated radio access architectures, signal degradation due to passive intermodulation (PIM) is a known phenomenon. PIM can result from non-linearities in passive RF components, such as connectors, cables, antennas, and filters, especially when these components degrade, are improperly installed, or consist of dissimilar metals. The resulting inter-modulation products may fall into critical receive frequency bands, leading to interference that can impair signal clarity, reduce data throughput, and degrade overall network reliability. Although techniques for measuring and mitigating PIM are available, they are typically implemented locally within individual radio units and are often tailored to closed, vendor-specific environments. As such, these techniques may not be directly applicable or scalable in open and disaggregated architectures, such as those specified by the O-RAN, which emphasize interoperability and centralized control across multi-vendor components.

Emerging O-RAN-based systems offer new possibilities for modular network design, interoperability between equipment from different vendors, and centralized management of distributed radio access components. An important element in such systems is the management plane (M-plane), which is a logical interface defined in the O-RAN architecture for configuring, monitoring, and controlling radio units (O-RUs) from distributed units (O-DUs). The M-plane supports functions such as fault management, performance monitoring, and device configuration over standardized protocols. Further the M-plane architecture supports either hierarchical or hybrid mode, wherein functions can be distributed among an O-DU and/or an SMO (Service Management and Orchestration). However, current implementations of the M-plane may lack sufficient mechanisms for initiating, coordinating, or reporting PIM-related operations in a transparent and network-wide manner. Specifically, it can be difficult to trigger PIM measurements during ongoing traffic, to communicate PIM-related diagnostics to the O-DU or higher network layers, or to dynamically update PIM cancellation strategies based on evolving interference patterns. These limitations may hinder effective monitoring and mitigation of PIM in open and disaggregated network environments.

Accordingly, there may exist a need for improvements in the coordination, execution, and reporting of passive intermodulation management functions within open and disaggregated radio access networks. In particular, enhanced support for interoperable, instruction-driven processes that allow for more efficient measurement, cancellation, and fault handling may contribute to more reliable and maintainable mobile communication systems.

### Summary

This need is addressed by apparatuses and methods in accordance with the independent claims. Further embodiments are addressed by the dependent claims.

According to a first aspect, the present disclosure proposes an apparatus (e.g., a radio unit) for managing PIM in a radio access network. The apparatus comprises a communication module that is configured to receive control instructions via a management-plane (M-plane) protocol from a network control unit. The control instructions specify at least one PIM-related operation. The apparatus comprises a processor that is configured to execute the specified PIM-related operation in accordance with the control instructions. The communication module is configured to transmit, via the M-plane protocol, data resulting from the executed PIM-related operation to the network control unit.

This may define an apparatus that enables centralized management of PIM within a radio access network. This apparatus may operate within the framework of an O-RAN-compliant system and may rely on communication between a network control unit, such as an O-DU and/or an SMO, and a radio unit, such as an O-RU, via the M-plane protocol. A functionality of the apparatus (e.g., radio unit) lies in its ability to receive control instructions from the network control unit, process and execute PIM-related tasks as specified in those instructions, and report the outcome of those tasks back to the control unit. These tasks can include, for example, measurement procedures or updates to cancellation parameters, depending on what the control unit requires. The architecture may enable that PIM-related operations are no longer limited to isolated execution at the radio unit but can be centrally triggered and supervised. This may make it possible to integrate PIM handling into a broader network management strategy and to provide better visibility and control over PIM effects throughout the system.

In some embodiments, the processor is configured to perform PIM measurements on radio signals at a radio unit in accordance with the control instructions. The processor may be further configured to update PIM cancellation parameters based on the PIM measurements and to apply the updated PIM cancellation parameters to a cancellation filter for processing radio signals. The communication module may be configured to transmit the PIM measurement data and alarms to the network control unit. This introduces additional functional detail by specifying how the processor may carry out the PIM-related operations indicated in the control instructions. The processor may initiate a measurement procedure to assess the presence and severity of PIM in radio signals. Based on the measurement results, it may then recalculate and apply updated cancellation parameters to a filter, enabling the apparatus to suppress the unwanted intermodulation products during ongoing signal processing. The communication module may transmit both the measurement results and any alarm conditions back to the network control unit. This approach may support more accurate and timely mitigation of PIM, which can contribute to improved signal integrity and network performance over time.

In some embodiments, the control instructions may include a command to configure a PIM alarm comprising a threshold value. The processor may be configured to compare the measured PIM values to the threshold and, upon determining that the threshold is exceeded, may cause the communication module to generate and transmit an alarm signal to the network control unit. This builds on the system's ability to monitor PIM levels by introducing a mechanism for threshold-based alarming. The network control unit may instruct the apparatus to configure a PIM alarm, specifying a threshold value that defines an unacceptable level of intermodulation. The processor may compare the measured PIM values against this threshold and, if the values exceed it, may trigger the communication module to send an alarm to the network control unit. This alarm can include both the occurrence of the event and potentially associated diagnostic data. By embedding threshold-based alarming into the control workflow, the system may enable fast and targeted detection of PIM degradation. This may help ensure that elevated interference levels are not only detected but actively communicated to higher network layers, thereby supporting timely maintenance or reconfiguration and helping to prevent long-term signal degradation.

In some embodiments, the control instructions may include a request for PIM measurement capability. The communication module may be configured to transmit capability information indicating whether the apparatus supports PIM measurement, PIM cancellation, and PIM alarm generation. This may enable the network control unit to query whether the radio unit supports specific PIM-related capabilities. These capabilities may include the ability to perform PIM measurements, to apply cancellation techniques, and to issue alarms when thresholds are exceeded. Upon receiving a request of this type, the apparatus may respond with a structured capability report via its M-plane communication channel. This functionality may serve as a foundation for adaptive and scalable network behavior. By knowing which radio units are equipped for PIM handling, the network control unit may make informed decisions about where to deploy measurement or cancellation routines, or where to escalate issues. This may reduce unnecessary configuration attempts and contribute to more efficient use of available network resources.

In some embodiments, the control instructions may include a time plan specifying one or more time windows and/or physical resource blocks in which PIM measurements are permitted. The processor may be configured to initiate PIM measurements only within those specified time windows and/or physical resource blocks. This introduces scheduling awareness into the execution of PIM measurements. The control instructions may include a plan that defines specific time windows or physical resource blocks in which the processor is allowed to perform measurements. These time windows may be selected based on expected traffic patterns, such as nighttime hours or low-load periods, or based on spectrum availability in the radio environment. Through this mechanism, the apparatus may avoid interfering with live traffic while still maintaining regular diagnostic coverage. It may also enable coordination of measurement routines across multiple units or cells, aligning with the overall traffic engineering and maintenance strategy. This approach may reduce the operational impact of PIM monitoring while supporting long-term signal quality assurance.

In some embodiments, the control instructions may include a request to perform a PIM measurement and to return a corresponding report. The processor may be configured to carry out the requested measurement procedure, and the communication module may be configured to transmit a report that comprises measurement values for an intermodulation array, which includes intermodulation products. This may enable the apparatus to act as a remote diagnostic unit, collecting detailed information about intermodulation artifacts and providing it to the network control unit in a structured format. By receiving such measurement reports, the network can build a clearer understanding of the interference landscape in specific cells or frequency bands. This may support long-term quality assurance, facilitate root-cause analysis of performance issues, and provide data-driven input for future maintenance or optimization actions.

In some embodiments, the control instructions may include a request to update PIM cancellation parameters. In response to such a request, the processor may be configured to perform a new PIM measurement and to recompute the cancellation parameters based on the updated measurement results. This may ensure that the cancellation logic remains adaptive to changes in the network environment, such as aging hardware, shifting RF conditions, or evolving traffic patterns. In this context, the term "cancellation logic" may encompass the entire adaptive PIM-suppression loop, including reception of control instructions, execution of a new PIM measurement, recalculation of cancellation parameters, and application of those parameters in the filter. By allowing the network control unit to initiate cancellation updates on demand, the system may maintain a high level of interference suppression without requiring continuous manual intervention or full restarts of the radio unit. This may contribute to maintaining consistent signal quality and avoiding service degradation over time.

In some embodiments, the processor may be configured to perform both intra-band and inter-band PIM measurements by detecting intermodulation distortion products in receive frequency bands. The processor may further be configured to generate measurement data that comprises at least one of a set of intermodulation values across multiple harmonic orders, an estimated distance to a PIM source, and a peak intermodulation value per measured frequency tone. This measurement capability may provide the apparatus with a broad diagnostic scope, allowing it to capture and characterize a wide range of interference effects. By distinguishing between intra-band and inter-band scenarios and by quantifying the characteristics and potential origin of the PIM, the system may support more precise localization of PIM sources and better tailoring of mitigation strategies. This depth of analysis may enhance the effectiveness of both automated cancellation and operator-led maintenance activities.

In some embodiments, the processor may be configured to compute inverse amplitude and phase values corresponding to detected PIM tones for intra-band cancellation, and to update a cancellation filter accordingly. This may allow the apparatus to generate precise counter-signals that target the specific characteristics of the observed intermodulation products. By applying these values to a cancellation filter, the system may actively suppress unwanted signal components within the same frequency band as the desired communication signals. This may help reduce receiver self-interference and improve the effective signal-to-noise ratio without requiring additional hardware-based filtering.

In some embodiments, the processor may be configured to process updated cancellation parameters for inter-band PIM cancellation without requiring additional filtering at an antenna interface. This approach may enable the apparatus to mitigate intermodulation products that result from signals in different frequency bands, even when those products are generated at the antenna where conventional filtering is no longer feasible. By relying on algorithmic processing rather than hardware modifications, the system may support effective PIM suppression in multi-band deployments that use shared or wideband antennas, thereby enhancing flexibility and reducing infrastructure complexity.

In some embodiments, the processor of the apparatus (e.g., radio unit) may be further configured to autonomously reinitiate a measurement cycle upon detecting a deterioration in radio signal quality, and to generate a new internal control instruction to update the cancellation parameters. This behavior may allow the apparatus to respond dynamically to changes in the radio environment without requiring external intervention. By continuously monitoring signal quality and adjusting its cancellation parameters when degradation is detected, the system may maintain optimal performance over time and react to factors such as aging components, environmental shifts, or evolving interference conditions. This self-correcting mechanism may contribute to higher reliability and lower maintenance effort in the network.

In some embodiments, the communication module may be further configured to transmit a measurement report including at least one of an intermodulation array of measurement values, an estimated distance to a PIM source, and an indication of the potential suppression capacity of the processor. By providing such detailed diagnostic information to the network control unit, the apparatus may support a more informed assessment of the interference environment at the radio site. This report may help the network identify the severity and likely origin of PIM, assess the effectiveness of cancellation efforts, and plan targeted maintenance or optimization actions. The inclusion of suppression capacity estimates may also assist in determining whether existing mitigation strategies are sufficient or require adjustment.

In some embodiments, the apparatus (e.g., radio unit) may be configured to manage PIM in an O-RAN-compliant radio access network, and the communication module may be configured to receive the control instructions via an O-RAN M-plane protocol from the network control unit (O-RU controller). This configuration may ensure compatibility with the standardized interfaces and architectural principles of O-RAN systems, enabling the apparatus (e.g., O-RU) to operate within a disaggregated, multi-vendor environment. By integrating PIM management into the O-RAN M-plane framework, the solution may align with broader trends toward open, interoperable network infrastructure while supporting centralized and coordinated control of interference mitigation.

According to a further aspect, the present disclosure proposes another apparatus (e.g., network control unit, such as O-DU) for managing PIM) in a radio access network. The apparatus comprises a processor that is configured to generate control instructions specifying at least one PIM-related operation. The apparatus further comprises a communication module that is configured to send the control instructions via a management-plane, M-plane, protocol to a radio unit.

This describes an apparatus that may serve as a control entity within a radio access network, such as a controller responsible for managing one or more radio units. In the context of an O-RAN-compliant system, this apparatus may correspond, for example, to an O-RU controller, which may be implemented within a distributed unit (O-DU) or a higher-level management function. Its role includes generating control instructions related to the handling of PIM, such as initiating measurements, requesting updates to cancellation parameters, or configuring thresholds for alarm generation. These control instructions are transmitted via the O-RAN M-plane protocol to the radio unit (e.g., O-RU), allowing the PIM-related operations to be triggered and managed in a coordinated and centralized manner. This setup may help ensure that the decision-making process is handled by a component with broader awareness of network conditions, including traffic load and resource availability, thereby improving the effectiveness and timing of PIM mitigation actions.

In some embodiments, the processor may be configured to detect degradation in radio signal quality that is indicative of PIM and to generate the control instructions based on the detected degradation. This configuration may allow the apparatus, such as an O-RU controller or O-DU, to actively monitor performance indicators-such as signal-to-noise ratios or error metrics-and to respond when they suggest interference potentially caused by PIM. By linking the generation of control instructions to real-time or historical degradation patterns, the system may support a responsive and data-driven approach to initiating mitigation measures, enabling targeted actions only when conditions warrant intervention.

In some embodiments, the apparatus (e.g., network control unit) may comprise an artificial intelligence (AI) module that is configured to analyze radio performance metrics such as block error rate (BLER) or signal-to-interference-and-noise ratio (SINR) per radio resource block. The Al module may be trained, using both live and historical BLER, SINR and other relevant measurements, to recognize patterns that are characteristic of passive-intermodulation-induced interference. The Al module may be further configured to trigger a PIM measurement when it detects degradation that is indicative of increased levels of passive intermodulation. This Al-driven approach may enable more sophisticated and context-aware detection of PIM-related interference. By leveraging patterns in performance data that might not be easily identifiable through conventional thresholding or rule-based systems, the apparatus may identify subtle or emerging interference effects earlier and with greater accuracy. This capability may support a more predictive and autonomous management strategy, contributing to improved reliability and reduced manual oversight in the network.

In some embodiments, the processor may be configured to generate, as the control instruction, a measurement plan that specifies one or more time windows and/or physical resource blocks in which the radio unit is permitted to autonomously perform the PIM-related operation. The communication module may be configured to transmit the measurement time plan to the radio unit via the M-plane protocol. This scheduling capability may allow the apparatus, such as an O-DU, to proactively allocate suitable time or resource intervals during which the radio unit can carry out PIM measurements or mitigation activities without disrupting active traffic. By decoupling the execution of PIM-related operations from real-time triggering, the network may optimize measurement timing for efficiency and minimal service impact, while still maintaining regular diagnostic and mitigation coverage.

In some embodiments, the control instructions may comprise at least one of the following: a request to initiate a PIM measurement at the radio unit, a request to update PIM cancellation parameters at the radio unit, a configuration of a PIM alarm threshold, or a request to report the PIM measurement capability of the radio unit. This outlines the specific types of PIM-related operations that may be managed by the apparatus. By supporting various instruction types, the apparatus may enable flexible and granular control over PIM management processes, ranging from basic diagnostics to adaptive cancellation updates and capability queries. This range of functionalities may allow the network to tailor its interference handling strategy to the needs of each deployment scenario, enhancing both responsiveness and operational transparency.

In some embodiments, the communication module is configured to receive, via the M-plane protocol, PIM measurement data from the radio unit. The processor may be further configured to analyze the received measurement data to determine whether further PIM-related operations are to be initiated. This configuration may enable the apparatus to close the feedback loop between measurement and control by incorporating the results of executed PIM operations into subsequent decision-making. By evaluating the reported measurement data, the system may assess the current interference conditions and decide whether additional actions-such as remeasurement, parameter adjustment, or alarm escalation-are needed. This may improve the adaptability of the system and support more effective long-term interference management.

In some embodiments, the communication module may be further configured to receive an alarm from the radio unit via the M-plane protocol when a measured PIM level exceeds a predefined threshold. This may enable the apparatus to be promptly informed of critical interference conditions detected at the radio unit, without the need for continuous polling. By receiving such alarms in a standardized and automated manner, the system may react more quickly to significant degradations in signal quality and take timely corrective or investigative action, thereby supporting the stability and reliability of the network.

In some embodiments, the communication module may be further configured to receive, via the M-plane protocol, capability information from the radio unit indicating whether the radio unit supports PIM measurement, PIM cancellation, and/or PIM alarm generation. This capability may allow the apparatus to dynamically assess the functional scope of connected radio units and adapt its control strategy accordingly. By knowing which units support specific PIM-related features, the network control unit may selectively target compatible devices for diagnostic or mitigation procedures, which may enhance operational efficiency and reduce unnecessary signaling or configuration attempts.

According to a further aspect, the present disclosure proposes a method for managing PIM in a radio access network. The method comprises receiving, at a radio unit (e.g., O-RU), control instructions via a management-plane protocol from a network control unit (e.g., O-RU controller or O-DU), wherein the control instructions specify at least one PIM-related operation. The method further comprises executing the specified PIM-related operation at the radio unit in accordance with the control instructions, and transmitting, via the M-plane protocol, data resulting from the executed PIM-related operation to the network control unit.

According to yet another aspect, the present disclosure proposes a method for managing PIM in a radio access network. The method comprises generating, by a network control unit (e.g., O-RU controller or O-DU), control instructions that specify at least one PIM-related operation. The method further comprises transmitting the control instructions to a radio unit (e.g., O-RU) via a management-plane protocol.

Those skilled in the art will recognize additional features and advantages upon reading the following detailed description, and upon viewing the accompanying drawings.

### Brief description of the Figures

Some examples of apparatuses and/or methods will be described in the following by way of example only, and with reference to the accompanying figures, in which
- Fig. 1: illustrates an overview of an O-RAN-compliant radio access network architecture (from O-RAN Architecture Description 13.0, O-RAN.WG1.TS.OAD-R004-v13.00, Feb 25);
- Fig. 2: schematically shows a system in which an O-RU and an O-DU communicate via an M-plane protocol interface in an O-RAN-compliant network;
- Fig. 3: shows a message exchange in which an O-DU apparatus retrieves PIM capabilities from an O-RU apparatus and receives alarm notifications via the NETCONF-based M-plane;
- Fig. 4: shows a message exchange in which an O-DU apparatus coordinates PIM measurement and cancellation updates with an O-RU apparatus over the M-plane using NETCONF;
- Fig. 5: shows a message exchange in which an O-DU apparatus configures a time plan for autonomous PIM measurements by an O-RU apparatus, which then performs the measurement and reports the result via the M-plane; and
- Fig. 6: shows an overall O-RAN M-plane extension introducing PIM measurement reports.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

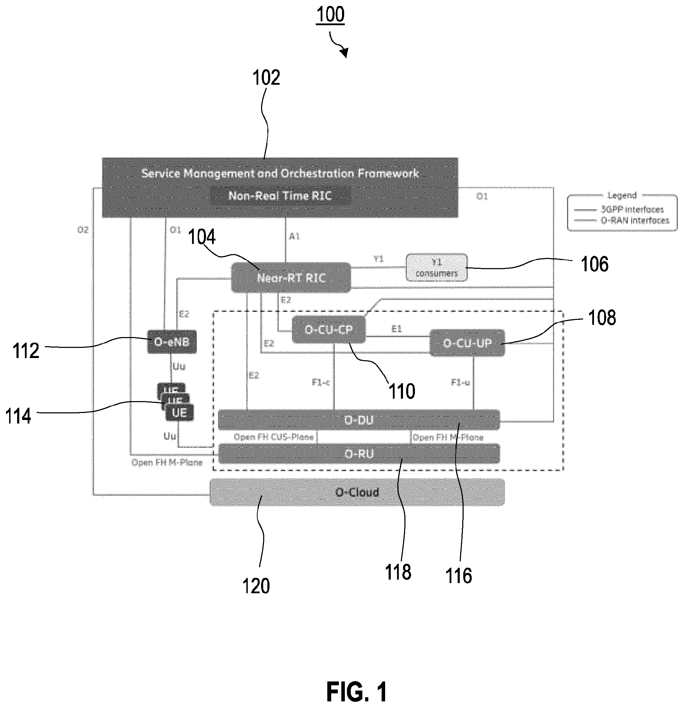

**Fig. 1** illustrates an overview of an O-RAN-compliant radio access network architecture 100, showing how various components interact within the system and how both O-RAN-defined interfaces and 3GPP interfaces may be integrated. The architecture is built around a modular and disaggregated structure, reflecting the principles of openness, vendor interoperability, and centralized orchestration. The depicted elements include logical and physical network functions such as control and user planes, orchestration frameworks, and interfaces between units like the distributed unit (O-DU), radio unit (O-RU), and centralized units (O-CU). Fig. 1 also shows connections between these elements through standardized O-RAN and 3GPP interfaces, enabling functional separation and coordination.

At the top of the architecture 100 is a Service Management and Orchestration Framework 102, which hosts a Non-Real Time RAN Intelligent Controller (Non-RT RIC). This framework may be responsible for high-level network automation and policy-based guidance that can be disseminated throughout lower layers of the RAN. It communicates with Near-Real Time RIC 104 via an A1 interface. The Near-RT RIC 104 may be responsible for handling tasks that require low latency and fast responsiveness, such as radio resource management and mobility control. It may interact with Y1 consumers 106 over a Y1 interface, allowing for integration of RIC-related applications and services. Additionally, the Near-RT RIC 104 may communicate with a Centralized Unit Control Plane (O-CU-CP) 110 and a Centralized Unit User Plane (O-CU-UP) 108 via an E2 interface.

The O-CU-CP 110 may handle control plane functionality for managing user sessions and mobility, while the O-CU-UP 108 may be responsible for data forwarding and user traffic management. Both centralized units are part of the logical gNB-CU structure in the 3GPP framework but are disaggregated in O-RAN. They communicate with each other over the E1 interface and interface with the O-DU 116 via the F1-c (control) and F1-u (user) interfaces, respectively.

The O-DU 116 represents the distributed unit and may handle functions such as MAC, RLC, and parts of the PHY layer. The MAC layer, or Medium Access Control layer, is responsible for managing how data is transferred to and from the physical radio interface. It handles scheduling of resources, multiplexing and demultiplexing of data from different users, and error correction through hybrid automatic repeat request (HARQ) mechanisms. The MAC layer ensures efficient use of the radio spectrum by dynamically assigning time and frequency resources to user equipment (UE) based on current channel conditions and service requirements. The RLC layer, or Radio Link Control layer, sits above the MAC layer and is responsible for ensuring reliable transmission of data between the network and the user equipment. It performs functions such as segmentation and reassembly of data packets, retransmission of lost or corrupted packets, and in-sequence delivery of data. The RLC layer can operate in different modes-transparent, unacknowledged, or acknowledged-depending on the required level of reliability and overhead. The PHY layer, or Physical layer, is the lowest layer in the protocol stack and interfaces directly with the radio hardware. It is responsible for the modulation and demodulation of signals, coding and decoding of data for error correction, and managing physical transmission channels. The PHY layer converts digital data into radio signals for transmission over the air and vice versa. It includes components such as OFDM modulation, MIMO processing, and channel estimation. In O-RAN architectures, the PHY layer may be split into a high-PHY part handled by the O-DU and a low-PHY part handled by the O-RU.

The O-DU 116 may communicate with the O-RU 118 through the Open Fronthaul (Open FH) interface. This interface is divided into two logical planes: the CUS-plane, responsible for control, user, and synchronization traffic, and the M-plane, which may be used for management tasks, including configuration and fault monitoring. These planes may ensure that the O-DU 116 and O-RU 118 can be implemented independently and sourced from different vendors while maintaining compatibility and coordination.

The O-RU 118 represents the radio unit, which may perform low-PHY layer processing and radio frequency transmission and reception. It is connected to UE 114 via the Uu interface, which is the standard 3GPP radio interface between the network and end devices. Fig. 1 also shows legacy or hybrid integration with an O-eNB 112, which can connect to both the O-RAN and legacy LTE systems via the X2 or other 3GPP interfaces.

Except for the O-RU 118, the remaining components shown in Fig. 1 may be hosted within a cloud-native environment represented by an O-Cloud 120. This infrastructure layer may provide underlying computing and virtualization resources required to support the disaggregated functions -such as the O-DU, O-CU or SMO- in a flexible and scalable manner, whereas the O-RU remains physically deployed at the radio site to perform low-PHY processing and radio-frequency transmission and reception.

The O-RAN architecture complements the 3GPP architecture and introduces several additional key components and interfaces to achieve its goals. One of the fundamental changes in O-RAN is the introduction of the open fronthaul (O-FH) interface, which is needed for disaggregating the Distributed Unit (DU) to the Distributed Unit (O-DU) and the Radio Unit (O-RU). This decoupling allows for independent sourcing of these components, enabling a multi-vendor RAN ecosystem.

The O-FH interface, specifically the O-RAN Split Option 7-2x, splits the Low-PHY and High-PHY functions, which are hosted in the O-RU 118 and O-DU 116, respectively. This split applies to both 4G LTE and 5G New Radio (NR) protocol stacks but may likewise be adopted in future radio-access generations, such as prospective 6G systems. The O-FH interface may facilitate the disaggregation of the gNB-DU into O-DU and O-RU, which opens the vendor ecosystem and allows for partial modernization.

Passive intermodulation (PIM) is a phenomenon that occurs when non-linearities in passive components, such as connectors, cables, and antennas, generate unwanted signals appear. These signals may be the result of two or more frequencies mixed up, creating new frequencies as intermodulation distortion (IMD) products that can interfere with the desired signals in a communication system. PIM may be problematic in 4G and 5G networks due to the high density of frequency bands and the need for precise signal quality. In 4G and 5G networks, PIM can cause several issues:
- Reduced Signal Quality: PIM can degrade the quality of the transmitted and received signals, leading to increased error rates and reduced data throughput. This can affect the overall performance of the network and the user experience.
- Interference: Unwanted signals generated by PIM can interfere with desired signals, causing disruptions in communication. This interference can be particularly problematic in densely populated areas where multiple frequency bands are used simultaneously.
- Increased Noise Floor: PIM can raise the noise floor of the network, making it more difficult to detect and decode weak signals. This can reduce the coverage area and capacity of the network, requiring more infrastructure to maintain the same level of service.
- Impact on Network Planning and Optimization: PIM can complicate network planning and optimization efforts, as it introduces additional variables that need to be accounted for. This can lead to increased costs and complexity in deploying and maintaining the network.

Additionally, PIM can change over time due to factors such as aging equipment, environmental conditions, and physical wear and tear. As components age, their materials and connections may degrade, leading to increased non-linearities and higher levels of PIM. Regular maintenance and timely replacement of aging equipment are essential to mitigate these effects and ensure consistent network performance.

Overall, addressing PIM is needed for ensuring the reliable and efficient operation of 4G and 5G networks. Techniques such as using high-quality components, proper installation practices, and regular maintenance can help mitigate the effects of PIM and improve network performance.

In order to mitigate PIM as much as possible, processes for PIM cancellation (PIMC) have been developed. For example, PIM cancellation can be achieved through:
- Measurement and Identification: Measuring PIM levels and identifying sources of PIM is the first step. This can be done using specialized measurement equipment that can detect the location and strength of PIM.
- Algorithmic Cancellation: Once the PIM levels and sources are identified, algorithmic techniques can be used to cancel the PIM. These algorithms can be integrated into the O-RU and the O-RU can be triggered by the O-DU to measure and cancel PIM regularly or when needed.

In more detail, there is intra-band transmitter IMD cancellation and inter-band transmitter IMD cancellation.

Intra-Band PIM Cancellation may address IMD products generated within a single frequency band. For example, an O-RU operating in Band 3 (1800MHz) may produce IMD products whether it is operating with a single 5GNR carrier or multiple 5GNR carriers. These IMD products can fall directly into the corresponding receive band, requiring stringent filter rejection to avoid receiver self-desensitization. Intra-band PIM cancellation can alleviate some of the required filter rejection.

Inter-Band PIM Cancellation may address IMD products generated from carriers in multiple operating bands. Even with dedicated transmitters and filters for each band, IMD products may be generated at an antenna interface, especially if a common wideband antenna is used to radiate in multiple bands. These IMD products can fall directly into operating receive bands, and there is no additional filtering that can be done at this point.

PIM cancellation and measurement in conventional systems takes place in the O-RU, as this is the place where signals created by PIM are processed and have to be removed. To measure and cancel PIM, the O-RU, (as part of the startup procedure) may send out specific signals and measure PIM created by these. The O-RU can then calculate corresponding signals for PIMC (e.g., the inverses of amplitude and phase of the PIM tones identified). These signals may then be applied throughout the operations of the O-RU to mitigate PIM as much as possible.

However, conventional systems according to the O-RAN architecture may have the following drawbacks:
1. When in operation, the O-RU cannot find out if PIM changes over time and different signals are needed for PIMC. This is because an O-RU needs to constantly operate to receive / transmit signals from / to the User Equipment (UEs) and therefore cannot send out the signals that would be needed for a PIM measurement.
2. There could be times when no traffic from / to the UEs occurs and at which an update of the PIM measurements could be executed in the O-RU. However, a decision for that cannot be taken in the O-RU but needs to be in the O-DU, which is aware of all traffic.
3. The specifications of the interface between O-DU and O-RU do not allow for:
   a. The O-DU to trigger PIM measurements at the O-RU from O-DU.
   b. Sending a measurement report or an alarm about PIM from the O-RU to the O-DU. As a result of this, the information about PIM is only available in the O-RU, with no option to inform higher layers about it. Therefore, the network operator will not be able investigate the level of PIM at different sites or be alarmed about too high PIM. This is a crucial drawback, as information about PIM helps the network operator to identify sites which require maintenance e.g. due to aging connectors.
   c. Sending information from the O-DU to the O-RU about times when a PIM measurement could be executed because it is acceptable to not serve traffic at this time

The proposed solution according to the present disclosure relies on improving the management plane (M-plane) of the open fronthaul interface between O-RU and O-DU to solve the above-mentioned shortcoming of conventional systems.

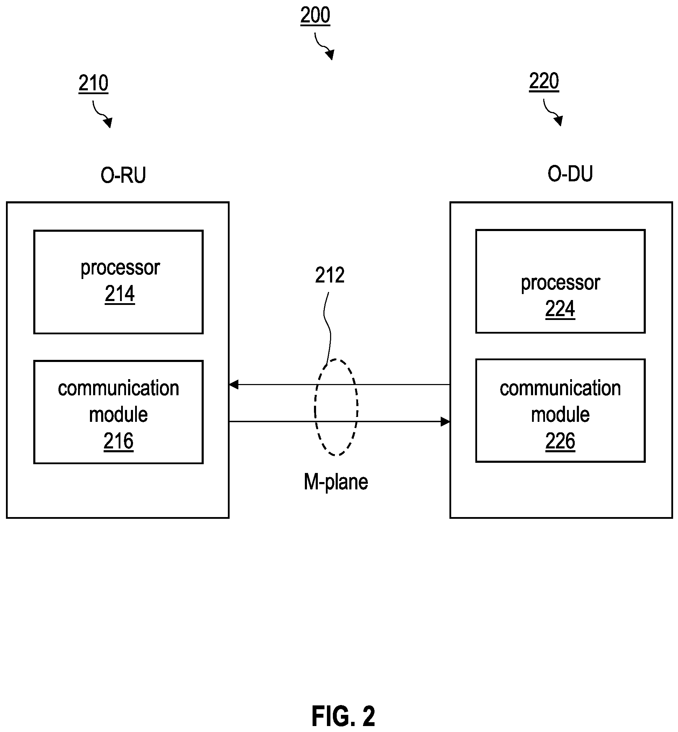

**FIG. 2** illustrates a system 200 comprising an apparatus 210, which may represent an O-RU (Open Radio Unit), and an apparatus 220, which may represent an O-DU (Open Distributed Unit). The apparatuses 210, 220 are interconnected via an M-plane protocol interface 212, which may facilitate communication between the two entities within an O-RAN-compliant radio access network.

Apparatus 210 (O-RU) comprises an interface 212 to apparatus 220 (O-DU), at least one processor 214, and a communication module 216. The interface 212 is configured to support bidirectional communication via an M-plane protocol between apparatus 210 and apparatus 220. The communication module 216 is operatively coupled to the interface 212 and is configured to receive control instructions from apparatus 220 and to transmit data resulting from executed PIM-related operations back to apparatus 220 via the same interface. The control instructions specify at least one PIM-related operation. The processor 214 is configured to execute the specified PIM-related operation in accordance with the control instructions. The processor 214 may execute tasks such as performing PIM measurements or updating cancellation parameters. The communication module 216 may transmit measurement results, alarm notifications, or capability information to apparatus 220 through interface 212 using the M-plane protocol.

Processor 214 could be implemented as a programmable logic device, such as a digital signal processor (DSP), a field-programmable gate array (FPGA), an application-specific integrated circuit (ASIC), or a general-purpose microprocessor running dedicated firmware for PIM-related signal processing tasks. It may be integrated into the control plane of the O-RU's hardware platform and configured to perform real-time analysis and computation based on received control instructions. Communication module 216 could be implemented as a software-defined management interface running on a dedicated network processor or as part of a system-on-chip (SoC) architecture that supports standardized management protocols such as NETCONF over SSH. This module may include a protocol stack compliant with the O-RAN M-plane specification and be capable of parsing, generating, and routing XML-encoded configuration and telemetry messages. Together, processor 214 and communication module 216 may form a tightly integrated control and signaling subsystem within the O-RU, enabling seamless execution and reporting of PIM-related operations under the control of the O-DU.

Apparatus 220 comprises interface 212 to apparatus 210, a processor 224, and a communication module 226. The communication module 226 is operatively coupled to the interface 212 and is configured to transmit control instructions to apparatus 210 and to receive data resulting from executed PIM-related operations via the same interface. The processor 224 is configured to generate control instructions that specify at least one PIM-related operation to be performed by apparatus 210. These control instructions may include, for example, a request to initiate a PIM measurement, a request to update cancellation parameters, a configuration of an alarm comprising a threshold, or a request for capability information. The communication module 226 is further configured to receive, via the M-plane protocol, measurement reports, alarms, or capability data transmitted by apparatus 210 in response to the control instructions.

Processor 224 could be implemented using a general-purpose processor, a network processor, or a virtualized computing environment running in an O-RAN-compliant O-DU platform. It may execute control software or orchestration logic capable of generating M-plane-compliant control instructions, based on network policies, real-time performance metrics, or predefined measurement schedules. The processor 224 may interact with higher-layer decision systems, such as the RIC (RAN Intelligent Controller), and translate abstract policies into actionable configuration commands for the radio units. Communication module 226 could be implemented as a software component within a management framework, such as a NETCONF client stack integrated into the O-DU's management layer. It may be realized using secure communication libraries capable of establishing and maintaining M-plane sessions with remote O-RUs, handling RPC-based message exchange, and processing structured XML responses. The communication module 226 may also include logic for managing session states, validating received data, and forwarding relevant telemetry or alarms to higher-level controllers or dashboards. Together, processor 224 and communication module 226 may enable apparatus 220 to act as an intelligent and policy-aware PIM management controller within an open, disaggregated radio access network.

Apparatus 210 may be configured to support a variety of PIM-related operations as specified by control instructions received via interface 212. Processor 214 may perform PIM measurements on radio signals, such as those transmitted or received by apparatus 210 (O-RU), in accordance with those instructions. Based on the results of these measurements, processor 214 may update the PIM cancellation parameters and apply the updated parameters to a cancellation filter in order to suppress intermodulation products during signal processing. Communication module 216 may be configured to transmit the resulting measurement data and any generated alarm notifications to apparatus 220 via interface 212.

For example, processor 214 may perform a PIM measurement by transmitting a known signal pattern during a scheduled low-traffic period and then analyzing the received signal for inter-modulation distortion products that fall within critical receive bands. Based on this analysis, it may identify specific PIM tones and calculate their amplitude and phase characteristics. Using this information, processor 214 may generate inverse amplitude and phase values to be applied to a digital cancellation filter, thereby suppressing the identified interference components. In another scenario, processor 214 may detect that the existing cancellation parameters are no longer sufficient-perhaps due to environmental changes or aging connectors- and may recompute new parameters following a repeat measurement. Communication module 216 may then transmit a measurement report to apparatus 220, detailing the strength and frequency of the observed intermodulation products, an estimate of the physical distance to the PIM source, and an indication of how effectively the new cancellation parameters are expected to mitigate the interference. If the measured PIM level exceeds a configured threshold, communication module 216 may additionally transmit an alarm notification to apparatus 220, allowing the network to take corrective or maintenance-related actions.

In one configuration, the control instructions received at interface 212 may include a command to configure one or more PIM-alarm thresholds. Each threshold may be associated with a particular intermodulation product (IMD), a receive-noise-floor-diversity-imbalance threshold value, or an absolute noise-floor-level threshold value, for example. Processor 214 may be configured to compare measured PIM values against its respective threshold and, when any of those thresholds is exceeded, cause communication module 216 to transmit an alarm signal-optionally identifying the specific IMD that triggered the alarm- to apparatus 220.

For instance, the control instructions received via interface 212 may specify that an alarm should be triggered if the PIM level in a particular frequency band exceeds -85 dBm. Processor 214 may perform periodic or scheduled measurements and detect that one of the inter-modulation products, such as a third-order tone in the uplink band, has reached a level of -82 dBm. Recognizing that this exceeds the defined threshold, processor 214 may flag the condition and instruct communication module 216 to generate and transmit an alarm notification to apparatus 220. The alarm may include metadata such as the affected frequency range, the time of detection, and the measured PIM level, allowing apparatus 220 to take timely action. In another example, the alarm configuration may target multiple harmonic orders, and the control instructions might define different thresholds for second- and third-order PIM products. If processor 214 observes that a second-order product exceeds its corresponding limit, it may immediately trigger the alarm mechanism to inform apparatus 220 of a potentially critical degradation event.

Apparatus 210 may further support capability reporting. In such cases, interface 212 and communication module 216 may be configured to transmit information indicating whether apparatus 210 supports functions such as PIM measurement, cancellation, and alarm generation. This information may be provided in response to a capability request included in the control instructions.

For example, apparatus 220 may send a capability request via the M-plane protocol to determine whether apparatus 210 is able to perform PIM measurements in a specific frequency band. In response, communication module 216 may transmit a structured report indicating that apparatus 210 supports both intra-band and inter-band PIM measurement, has active cancellation functionality, and is capable of generating alarm notifications based on threshold exceedance. In another case, the request may ask for more detailed capability attributes, such as the number of harmonic orders the apparatus can detect or the extent to which cancellation is effective in dBc. Apparatus 210 may then respond by stating, for example, that it supports measurement across four harmonic orders and can achieve cancellation up to -25 dBc for certain band combinations. This capability information may allow apparatus 220 to determine whether apparatus 210 can be tasked with specific diagnostic or mitigation functions, or whether alternative units should be prioritized for such operations.

The control instructions may also specify a time plan that defines one or more time windows and/or physical resource blocks (PRBs) during which PIM measurements are permitted. Processor 214 may be configured to initiate measurements only within the defined temporal or spectral bounds, which may help minimize impact on active user traffic.

For example, the control instructions received by apparatus 210 may include a time plan that allows PIM measurements only during a daily maintenance window from 02:00 to 04:00, when user traffic is typically low. Processor 214 may monitor the system time and automatically initiate PIM measurements at the beginning of the specified window, ensuring that no disruption occurs during high-traffic periods. If unforeseen demand nevertheless arises, the O-DU may transmit an updated time plan that instructs processor 214 to suspend or abort the ongoing measurement and to release the occupied resources, thereby preserving user-plane capacity. In another case, the control instructions may define a set of physical resource blocks-such as PRBs at the edge of the allocated frequency band-where measurements can be safely performed without interfering with user data. Processor 214 may then limit the signal generation and analysis associated with the PIM measurement process to those PRBs, thereby ensuring compliance with network performance requirements. In both scenarios, the enforcement of temporal or spectral constraints-and the ability to dynamically interrupt measurements when required- may allow apparatus 210 to carry out diagnostics in a way that is minimally invasive to ongoing communication services.

Apparatus 210 may also be configured to execute PIM measurements upon explicit request and to provide a corresponding report. In such cases, communication module 216 may transmit a report containing measurement values for an intermodulation array, including data related to detected intermodulation products. For example, apparatus 220 may send an explicit request to apparatus 210 via the M-plane protocol, instructing it to perform a PIM measurement in a specific band where interference has recently been suspected. In response, processor 214 may initiate a measurement procedure, analyze the received signals, and identify intermodulation products such as IM3 and IM5 components in the uplink band. Once the measurement is completed, communication module 216 may generate a report that includes the amplitude levels of these components across the affected frequency range, the harmonic order of each detected product, and their corresponding frequencies. In another scenario, the report may also contain additional diagnostic information, such as time-stamped measurement data and indicators of frequency overlap between intermodulation products and active PRBs. This report may enable apparatus 220 to assess the severity of the interference and to determine whether further mitigation actions, such as updating the cancellation parameters or triggering maintenance, are needed.

In other configurations, processor 214 may perform a new PIM measurement and recompute the cancellation parameters in response to an update request received from apparatus 220. Processor 214 may further be capable of performing both intra-band and inter-band PIM measurements by detecting intermodulation distortion products in receive frequency bands. The resulting measurement data may include a variety of diagnostic metrics, such as harmonic intermodulation values, an estimated distance to the source of the PIM, and peak intermodulation values for specific frequency tones. For example, apparatus 220 may send an update request after detecting degraded uplink performance in a specific band. In response, processor 214 may perform a new PIM measurement, identify updated intermodulation products, and recompute the cancellation parameters accordingly. The resulting data may show, for instance, strong IM3 components at -80 dBm and estimate the PIM source to be approximately 2.3 meters from the antenna port, suggesting a degraded connector near the antenna.

A scheduling module may be hosted in the O-DU (or another higher-layer controller). The scheduling module may determine permissible time windows and/or resource blocks for PIM measurements and may transmit the resulting schedule to apparatus 210 (O-RU) via control instructions received at interface 212. Processor 214 may then perform measurements only when authorized by that schedule. This scheduling may be responsive to periodic events or to the availability of traffic-free intervals in the network. For example, the O-DU-based scheduling module may detect a recurring low-traffic period during early-morning hours and instruct processor 214 to carry out PIM measurements solely within that window. In another case, it may permit measurements during specific radio frames in which no user data is mapped to the corresponding resource blocks. By delegating the scheduling logic to the O-DU and making the O-RU purely reactive, the system may ensure that diagnostics remain non-intrusive to ongoing communication services.

For intra-band cancellation, processor 214 may compute inverse amplitude and phase values corresponding to detected PIM tones and may update the cancellation filter accordingly. In the case of inter-band PIM cancellation, processor 214 may be configured to process updated cancellation parameters without requiring additional filtering at the antenna interface, allowing software-based suppression even when hardware-based solutions are infeasible. For example, during a PIM measurement, processor 214 may detect a third-order intermodulation product at a specific frequency with an amplitude of -85 dBm and a phase offset of 135 degrees. It may then compute a cancellation signal with the same frequency, an amplitude of +85 dBm, and a phase shift of -135 degrees to generate a destructive interference pattern. This inverse signal may be applied through a digital cancellation filter to suppress the unwanted tone in the receive path.

Processor 214 may also be configured to autonomously reinitiate a measurement cycle upon detecting a deterioration in radio signal quality. In such cases, the processor may generate an internal control instruction to trigger an update of the cancellation parameters. Communication module 216 may be configured to transmit a detailed measurement report that includes, for example, an intermodulation array of measurement values, an estimated distance to the PIM source, and an indication of how effectively processor 214 is expected to suppress the interference. For example, processor 214 may detect a gradual drop in SINR on certain uplink resource blocks and autonomously trigger a new PIM measurement cycle. It may then update the cancellation parameters and instruct communication module 216 to send a report indicating IM3 levels near -78 dBm, an estimated PIM source distance of 1.5 meters, and a predicted suppression capacity of 20 dB.

In certain embodiments, processor 224 of apparatus 220 (O-DU) may be configured to detect degradation in radio signal quality that is indicative of PIM. This degradation may be based on metrics such as reduced signal-to-noise ratio or increased block error rate. Upon detection of such degradation, processor 224 may generate corresponding control instructions to trigger appropriate PIM-related operations at the radio unit. For example, processor 224 may observe a persistent drop in SINR and a rise in BLER on uplink transmissions from a specific sector. In response, it may generate a control instruction requesting apparatus 210 to perform a PIM measurement and update its cancellation parameters.

Apparatus 220 may also include an Al module that is configured to analyze radio performance data, such as block error rate (BLER) or signal-to-interference-and-noise ratio (SINR) per radio resource block (RB). When the Al module detects degradation patterns that suggest an increase in PIM levels, it may trigger processor 224 to generate a corresponding control instruction, for example to initiate a measurement or update cancellation logic. This allows apparatus 220 to act not only on fixed rules or thresholds but also on learned patterns or predictive models derived from real-time network behavior. For example, the Al module may be trained on historical data to recognize that a recurring drop in SINR across specific RBs during certain hours is typically associated with PIM caused by thermal expansion at a connector. Upon detecting a similar pattern in real-time, the Al module may trigger processor 224 to send a control instruction to apparatus 210 to perform a targeted PIM measurement. In another case, the Al module may identify a combination of rising BLER and frequency-specific interference patterns as indicative of emerging inter-band PIM and instruct the processor to initiate an update of the cancellation parameters accordingly.

The Al module in apparatus 220 could be implemented as a software-based component running on a general-purpose processor or a dedicated machine learning accelerator within the O-DU platform. It may be part of a real-time analytics engine that continuously ingests radio performance metrics such as BLER, SINR per radio resource block, throughput, and retransmission rates. The module could use supervised learning models-such as decision trees, random forests, or neural networks-that have been trained offline using labeled network performance data to identify patterns indicative of passive intermodulation (PIM).

Alternatively, the Al module could rely on unsupervised learning algorithms, such as clustering or anomaly detection techniques, to identify deviations from normal radio behavior that may not be explicitly labeled. The implementation may also include a feedback mechanism where confirmed PIM events are used to continuously refine the model's accuracy. The Al logic could run natively on the O-DU or be distributed across an edge compute layer, provided it has access to real-time or near-real-time telemetry from the radio units.

To interface with the rest of the system, the Al module may be integrated into the network control software stack, exposing its decisions via internal APIs that trigger the generation of control instructions by processor 224. This modular implementation may allow the Al component to be updated or improved independently, supporting continuous learning and adaptation as network conditions evolve.

In addition to reactive control, processor 224 may be configured to generate a measurement time plan as a form of proactive control. This time plan may define specific time windows and/or physical resource blocks during which apparatus 210 is permitted to autonomously perform the specified PIM-related operation. Communication module 226 is configured to send this time plan via the M-plane protocol, enabling apparatus 210 to carry out scheduled measurements or updates without further prompting.

The control instructions generated by processor 224 may vary depending on operational needs. They may include, for example, a request to initiate a PIM measurement, a command to update cancellation parameters, a configuration of an alarm comprising one or multiple thresholds, or a request to report the PIM-related capabilities of apparatus 210. This flexibility allows apparatus 220 to implement a comprehensive PIM management strategy across different radio units.

Communication module 226 may further comprise a receiver that is configured to receive data transmitted from apparatus 210 via the M-plane protocol. This data may include measurement results, alarm notifications, or capability information. Processor 224 may analyze the received measurement data to assess the current state of interference and determine whether further actions are required. This may enable apparatus 220 to implement an adaptive, closed-loop control strategy that responds to current interference conditions in real time.

When a measured PIM level exceeds a predefined threshold, the communication module 226 may also be configured to receive an alarm notification from apparatus 210. This enables prompt identification of critical conditions without the need for polling or active monitoring. Additionally, the communication module 226 may be configured to obtain capability information from apparatus 210, allowing apparatus 220 to determine whether the radio unit supports specific functions such as PIM measurement, cancellation, or alarm signaling. This may inform the orchestration logic of apparatus 220, helping it to allocate responsibilities and target control instructions more effectively across the radio access network.

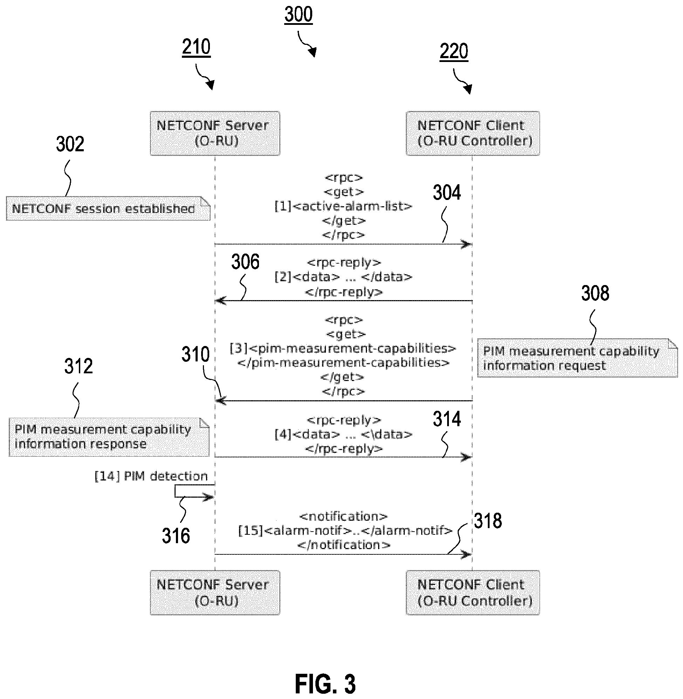

**Fig. 3** illustrates a message exchange sequence 300 between an apparatus 210, functioning as a NETCONF Server (O-RU), and an apparatus 220, functioning as a NETCONF Client (O-RU Controller), for the purpose of retrieving PIM measurement capabilities and receiving alarm notifications.

The message exchange begins with an establishment of a NETCONF session 302 between apparatus 220 and apparatus 210. This sets up the M-plane communication channel over interface 212, enabling subsequent interaction. A NETCONF session is a secure, stateful communication channel established between a NETCONF client and a NETCONF server for the purpose of exchanging configuration and management data. In the context of O-RAN, this session may run over SSH or TLS and enable structured communication using XML-based messages. Once established, the session allows the client-such as apparatus 220-to send <rpc> requests for operations like reading configuration, modifying settings, or retrieving status information. The server-such as apparatus 210-may respond with <rpc-reply> messages or send <notification> messages when configured events occur. The session may ensure that both ends remain synchronized during the management exchange, and it provides mechanisms for authentication, message ordering, and error handling.

Once the session is active, apparatus 210 (NETCONF Server, e.g., O-RU) sends an <rpc> message 304 to apparatus 220 (NETCONF Client, e.g., O-DU). This message 304 contains a <get><active-alarm-list></get> command and is intended to inform a list of any currently active alarms that are supported by apparatus 210. In response, apparatus 220 returns a <rpc-reply> message 306 containing a <data> structure, which instructs the O-RU 210 to activate one or more of the supported alarms. This exchange allows the controller to query the current alarm state of the O-RU but does not instruct the O-RU to initiate a new PIM measurement or configure alarm thresholds.

Next, at 308, apparatus 220 issues another <rpc> message 310, this time requesting PIM measurement capability information by invoking <pim-measurement-capabilities>. This step corresponds to the action labeled as 308, where the O-RU Controller 220 queries whether the O-RU 210 supports specific PIM-related functions such as measurement, cancellation, and alarm generation. In response, at 312, apparatus 210 transmits a <rpc-reply> message 314 that includes the requested capability information.

Following the exchange of capability information, apparatus 210 may autonomously detect a PIM condition, as illustrated by 316. This may occur due to threshold-based monitoring or as a result of previously initiated measurement operations. Upon detecting such a condition, apparatus 210 may generate and transmit a <notification> message 318 containing an <alarm-notif> structure. This alarm notification may be sent proactively to apparatus 220 and signal that a predefined PIM threshold has been exceeded.

Throughout this interaction, the M-plane protocol over interface 212 may enable structured and standards-based communication between the two apparatuses. Apparatus 220 may initiate control and query actions, while apparatus 210 may execute measurement, detection, and reporting tasks. The sequence captured in Fig. 3 demonstrates how O-RU and O-DU (or O-RU controller) components may coordinate PIM-related management activities.

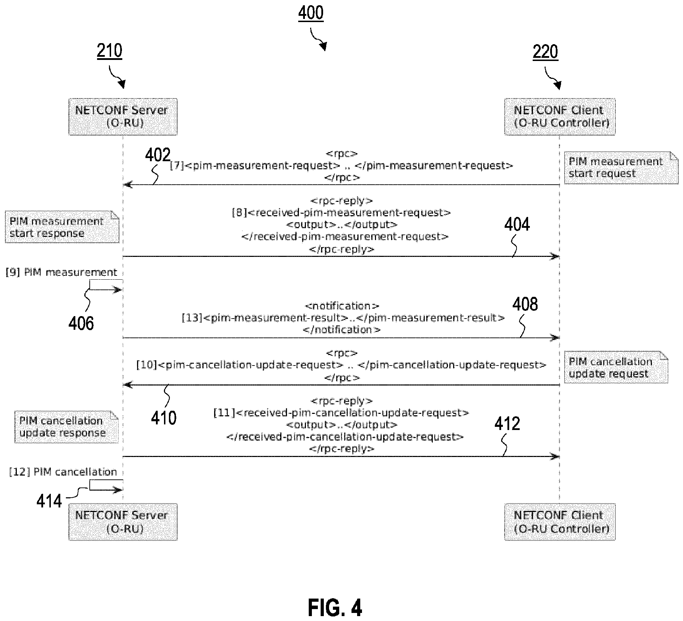

**Fig. 4** illustrates a message exchange diagram 400 between an apparatus 210, functioning as a NETCONF Server representing an O-RU, and an apparatus 220, functioning as a NETCONF Client representing an O-RU Controller, such as an O-DU. The exchange proceeds over the M-plane interface and describes how PIM measurement and PIM cancellation update procedures may be coordinated through NETCONF-based communication. The sequence 400 demonstrates request initiation by the controller 220, acknowledgment by the radio unit 210, execution of PIM-related operations, and the reporting of outcomes.

The sequence 400 begins with apparatus 220 initiating a PIM measurement procedure by transmitting an <rpc> message 402 containing a <pim-measurement-request> element. This request corresponds to a functionality, where the O-RU Controller 220 is configured to issue a request to perform a PIM measurement. In response to the request, apparatus 210 sends an <rpc-reply> message 404 containing a <received-pim-measurement-request> confirmation, which may include an output acknowledgment or status information. This step is annotated in Fig. 4 as a PIM measurement start response, indicating successful initiation of the requested action. For example, the <rpc> message 402 sent from apparatus 220 may include a <pim-measurement-request> element specifying a particular frequency band and a time window during which the measurement should be performed. The request may also contain optional parameters such as the expected harmonic order or a measurement duration. Upon receiving this request, apparatus 210 may respond with <rpc-reply> message 404, containing a <received-pim-measurement-request> element that includes an output confirmation, such as a status code indicating that the request has been accepted and queued for execution. The response may also echo key parameters from the request for validation and traceability.

After this exchange, apparatus 210 may perform the actual PIM measurement operation, as shown at 406. This reflects the execution of a PIM-related operation by the processor 214 of the O-RU 210 in accordance with received control instructions. Once the measurement is completed, apparatus 210 may transmit a <notification> message 408 containing a <pim-measurement-result> element. This message represents the reporting of the measurement outcome to apparatus 220 and corresponds to features which specify the transmission of measurement data and detailed reporting structures.

Following the measurement procedure, apparatus 220 may initiate an update of the PIM cancellation parameters by sending another <rpc> message 410 containing a <pim-cancellation-update-request>. This request may instruct the O-RU 210 to perform a new PIM measurement and update cancellation parameters. In response, apparatus 210 may transmit an <rpc-reply> message 412 containing a <received-pim-cancellation-update-request> structure, acknowledging receipt and readiness to perform the cancellation update. Cancellation parameters may include values such as the amplitude and phase of identified intermodulation distortion products, which are used to generate cancellation signals that destructively interfere with those unwanted components. For example, if apparatus 210 detects a third-order intermodulation product at a specific frequency, the cancellation parameters may specify an inverse signal at the same frequency with a calculated amplitude and phase offset that effectively suppresses the distortion. The parameters may also include coefficients for digital filters that are applied to the transmit signal path to pre-compensate for known nonlinear effects. In some cases, the update request from apparatus 220 may instruct the O-RU 210 to refine existing parameters by focusing on specific bands or tones where interference has recently increased.

Subsequently, apparatus 210 may carry out the PIM cancellation procedure, indicated by step 414. This corresponds to the processor 214 being configured to apply updated cancellation parameters to mitigate intra-band or inter-band PIM without requiring additional hardware filtering.

Throughout the entire sequence, communication may be managed via the M-plane protocol between interface 212 of both apparatuses. Apparatus 220 initiates measurement and cancellation update requests, while apparatus 210 executes the corresponding tasks and reports back the outcomes. The interplay between the two devices reflects a dynamic and centralized control architecture in line with the principles of the O-RAN management-plane framework. The operations described in Fig. 4 demonstrate real-time orchestration of PIM mitigation strategies in a distributed, multi-vendor radio access network.

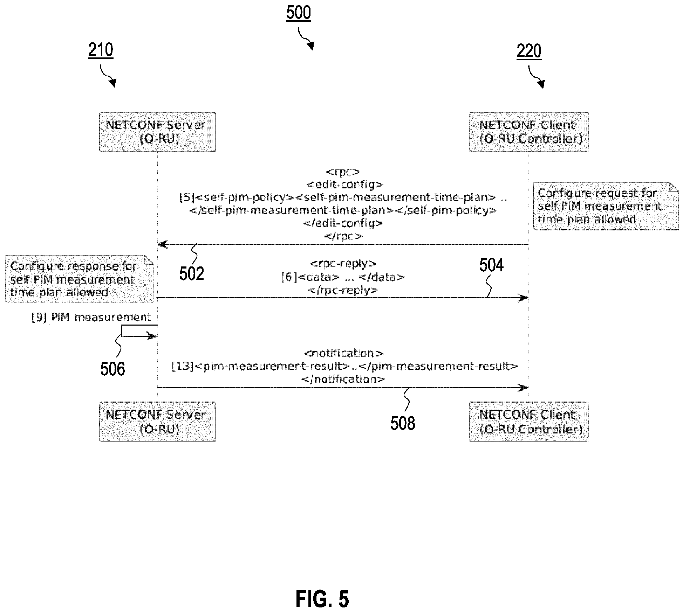

**Fig. 5** illustrates a message exchange diagram 500 between an apparatus 210, which functions as a NETCONF Server (O-RU), and an apparatus 220, which functions as a NETCONF Client (O-RU Controller, such as an O-DU). The sequence demonstrates how apparatus 220 may configure apparatus 210 with a self-managed PIM measurement time plan via the M-plane protocol, and how apparatus 210 subsequently may perform a PIM measurement autonomously and reports the result.

The sequence begins when apparatus 220 sends an <rpc> message 502 to apparatus 210. This message is of type <edit-config> and contains a <self-pim-policy> structure, including a <self-pim-measurement-time-plan> element. This structure may define the time plan that specifies one or more time windows and/or physical resource blocks during which apparatus 210 is permitted to autonomously perform PIM-related operations.

Apparatus 210 receives this configuration request 502 via interface 212 and processes it using its internal processor 214 and communication module 216. It may respond with an <rpc-reply> message 504, which may include a <data> section confirming receipt and acceptance of the time plan. This is annotated in Fig. 5 as "Configure response for self PIM measurement time plan allowed." This response confirms that the radio unit will honor the configured time plan and operate accordingly.

At a later time-when a scheduled time window is reached and conditions are met-apparatus 210 may autonomously initiate a PIM measurement operation, as represented by step 506. The measurement may be conducted without further prompting from apparatus 220, in accordance with the time plan previously received.

Following the execution of the PIM measurement, apparatus 210 may generate a <notification> message 508 containing a <pim-measurement-result> element. This notification may be sent to apparatus 220 to report the outcome of the autonomous PIM measurement. The reporting of this result reflects a behavior, where the processor 214 executes a PIM measurement and the communication module 216 is configured to transmit measurement data, including an intermodulation array, estimated distance to the PIM source, or suppression capacity.

For example, apparatus 220 may configure apparatus 210 with a time plan that permits autonomous PIM measurements between 01:00 and 03:00 during low-traffic periods. This time plan is sent using an <edit-config> message 502 that includes a <self-pim-measurement-time-plan> element specifying the allowed window. Upon receiving and accepting the configuration, apparatus 210 stores the time plan and waits for the appropriate window. When the scheduled time arrives, processor 214 initiates a PIM measurement without receiving any new commands from apparatus 220. The processor analyzes the signal path, detects intermodulation components, and generates a report with values such as IM3 and IM5 levels, an estimated PIM source location 1.8 meters from the antenna port, and a suppression capacity estimate of 18 dB. Communication module 216 then sends this information back to apparatus 220 in a <pim-measurement-result> notification 508, allowing the controller to log or act on the results without having directly triggered the measurement at that moment.

Throughout the entire sequence 500, interface 212 supports bidirectional management communication using the M-plane protocol. Apparatus 220 performs configuration of a time plan, while apparatus 210 executes the scheduled operation and reports back autonomously. Fig. 5 thus demonstrates a proactive and decentralized PIM monitoring approach, reducing the need for on-demand measurement triggers and integrating PIM diagnostics into a broader traffic-aware maintenance strategy. This process supports efficient, low-impact interference monitoring in O-RAN-compliant systems.

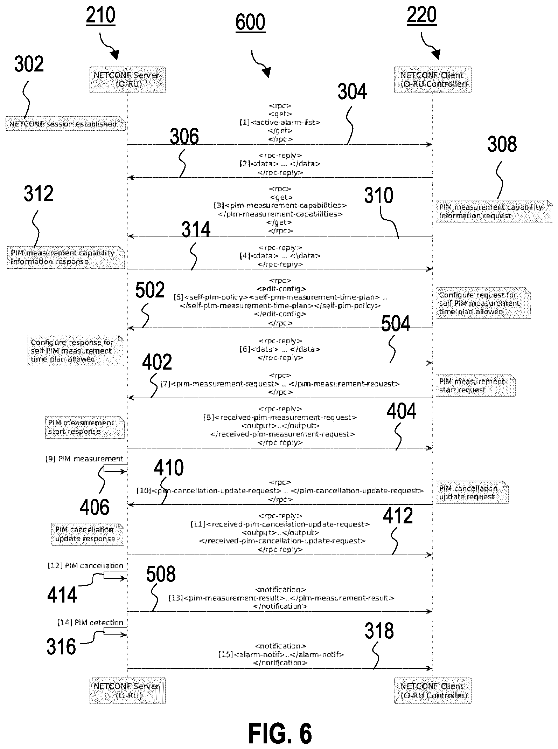

**Fig. 6** illustrates a message exchange sequence 600 between an apparatus 210 acting as a NETCONF server, corresponding to an O-RU, and an apparatus 220 acting as a NETCONF client, corresponding to an O-DU, over an M-plane interface, showing the steps previously described involved in retrieving PIM measurement capabilities and receiving alarm notifications, wherein the O-DU 220 first establishes a NETCONF session with the O-RU 210, the O-RU 210 transmits a list of supported alarms to the O-DU 220, the O-DU 220 requests and receives a list of active alarms, the O-DU 220 queries the O-RU 210 for PIM measurement capabilities, and the O-RU 210 responds with a capability report, followed by the O-RU 210 autonomously detecting a PIM event and sending an alarm notification to the O-DU 220.

The following summarizes some proposed extensions to the management-plane (M-plane) protocol between the O-RU and the O-DU. These extensions aim to overcome the limitations identified in conventional O-RAN systems, where the O-DU has no mechanism to actively control or monitor PIM-related functions in the O-RU. The present disclosure may improve this situation by enabling structured M-plane communication for PIM handling through a series of newly introduced messages.

One extension allows the O-DU to instruct the O-RU to configure a PIM alarm. This includes providing one or more threshold values, which the O-RU may use to detect whether a PIM event exceeds the configured limit. Upon such detection, the O-RU generates and transmits an alarm to the O-DU. This behavior is documented in Fig. 2 and is associated with messages 304 and 306.

Another extension enables the O-DU to request the PIM measurement capabilities of the O-RU. In this context, the O-DU can query whether the O-RU supports measurement, cancellation, and alarm generation related to PIM. The O-RU replies with structured capability information. This procedure is also documented in Fig. 3 and corresponds to messages 310 and 314.

The O-DU is further enabled to send a measurement time plan -initial or updated- to the O-RU. This plan defines time slots during which the O-RU is permitted to perform PIM measurements autonomously. If network conditions change unexpectedly, the O-DU may transmit a revised plan (or a cancellation command) at short notice, thereby overriding the current schedule and instructing the O-RU either to defer, suspend or abort measurements as required. The communication of such a plan is described in Fig. 5, specifically in messages 502 and 504.

Additionally, the O-DU may request the O-RU to initiate a PIM measurement and return the results. This on-demand measurement procedure is described in Fig. 4 and linked to messages 402, 404, and 406.

The present disclosure also allows the O-DU to request a PIMC update. In this scenario, the O-DU instructs the O-RU to perform a measurement and recompute the cancellation parameters. This flow is documented in Fig. 4 and comprises messages 410, 412, and 414.

On the reporting side, the O-RU may issue a PIM measurement report to the O-DU after completing a measurement. This report may include, for each downlink-uplink band combination,
- measured levels of inter-modulation products (IMs) that are most relevant to the current carrier configuration-e.g. the 3rd, 5th and 7th-order IMs for a two-carrier scenario, and an extended set of IM orders when more than two carriers are active;
- any additional IM products that the measurement algorithm detects, thereby covering the full range of possible IMs;
- receive-path indicators that are symptomatic of PIM, such as noise-floor diversity imbalance or persistently elevated absolute noise floors;
- an estimated distance to the PIM source together with an indication of the potential suppression capability obtained through PIM cancellation,
- a receive-noise-floor-diversity-imbalance (a measurable difference in the noise floor levels between two or more receive signal paths (such as antennas or diversity branches) that are ideally expected to have similar characteristics in a radio unit), and/or
- an absolute noise-floor-level (total power of background noise measured at the receiver input).

These reports are described in Fig. 4 and Fig. 5 and are linked to message 408, 508.

Further, the O-RU may generate and send a PIM alarm to the O-DU if the detected PIM level exceeds the configured threshold. Optionally, the alarm may include information on the extent to which PIMC is possible, and may also carry a detailed measurement report. This behavior is covered in Fig. 3 and corresponds to messages 316 and 318.

Together, these protocol enhancements may support a more intelligent, dynamic, and centrally coordinated approach to PIM management across disaggregated RAN components.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (210) for managing passive intermodulation, PIM, in a radio access network, the apparatus comprising
an communication module (216) configured to receive control instructions via a management-plane, M-plane, protocol from a network control unit (220), the control instructions specifying at least one PIM-related operation;
a processor (214) configured to execute the specified PIM-related operation in accordance with the control instructions; and
the communication module (216) configured to transmit, via the M-plane protocol, data resulting from the executed PIM-related operation to the network control unit (220).

2. The apparatus (210) of claim 1, wherein the processor (214) is configured to
perform PIM measurements on radio signals at a radio unit in accordance with the control instructions;
update PIM cancellation parameters based on the PIM measurements, and
apply the updated PIM cancellation parameters to a cancellation filter for processing radio signals; and
the communication module (216) is configured to transmit the PIM measurement data and alarms to the network control unit (220).

3. The apparatus (210) of claim 1 or 2, wherein the control instructions include a command to configure a PIM alarm comprising one or more threshold values, including at least one inter-modulation-product threshold value, and/or at least one receive-noise-floor-diversity-imbalance threshold value, and/or at least one absolute noise-floor-level threshold value, and
wherein the processor (214) is configured to compare the measured PIM values with its respective threshold value and, upon exceeding the threshold value, cause the communication module (216) to generate and transmit an alarm signal to the network control unit (220).

4. The apparatus (210) of any one of the previous claims, wherein the control instructions include a request for PIM measurement capability, and
wherein the communication module (216) is configured to transmit capability information indicating whether the apparatus supports PIM measurement, cancellation, and alarm generation.

5. The apparatus (210) of any one of the previous claims, wherein the control instructions include a time plan specifying one or more time windows and/or physical resource blocks in which PIM measurements are permitted, and
wherein the processor (214) is configured to initiate PIM measurements only within those specified time windows and/or physical resource blocks.

6. The apparatus (210) of any one of the previous claims, wherein the control instructions include a request to perform a PIM measurement and to return a corresponding report, and wherein the communication module (216) is configured to transmit the report comprising measurement values for an intermodulation array comprising intermodulation products.

7. The apparatus (210) of any one of the previous claims, wherein the control instructions include a request to update PIM cancellation parameters, and wherein the processor (214) is configured to perform a new PIM measurement and to recompute the cancellation parameters in response to the request.

8. The apparatus (210) of any one of the previous claims, wherein the communication module (216) is further configured to transmit a measurement report including at least one of
an intermodulation, IM, array of measurement values,
an estimated distance to a PIM source,
an indication of potential suppression capacity of the processor (214),
a receive-noise-floor-diversity-imbalance metric, and
a noise-floor-level metric.

9. The apparatus (210) of any one of the previous claims, wherein the apparatus (210) is configured to manage PIM in an O-RAN-compliant radio access network, wherein the communication module (216) is configured to receive the control instructions via an O-RAN M-plane protocol from the network control unit. (O-RU controller)

10. An apparatus (220) for managing PIM in a radio access network, the apparatus comprising
a processor (226) configured to generate control instructions specifying at least one PIM-related operation; and
a communication module (226) configured to send the control instructions via an M-plane protocol to a radio unit (210).

11. The apparatus (220) of claim 10, wherein the processor (226) is configured to
detect degradation in radio performance indicative of PIM, and
generate the control instructions based on the detected degradation.

12. The apparatus (220) of claim 10 or 11, further comprising an
artificial intelligence, Al, module configured to analyze radio performance such as BLER, SINR per radio resource block, RB, and to trigger the processor (226) to perform a PIM measurement when the Al module detects degradation indicative of increased PIM levels.

13. The apparatus (220) of any of claims 10 to 12, wherein the processor (226) is configured to generate, as the control instruction, a measurement time plan specifying one or more time windows and/or physical resource blocks in which the radio unit is permitted to autonomously perform the PIM-related operation,
and wherein the communication module (226) is configured to transmit the measurement time plan via the M-plane protocol.

14. The apparatus (220) of any of claims 10 to 13, wherein the control instructions comprise at least one of
a request to initiate a PIM measurement at the radio unit,
a request to update PIM cancellation parameters at the radio unit,
a configuration of a PIM alarm comprising on one or multiple thresholds, and
a request to report the PIM measurement capability of the radio unit.

15. The apparatus (220) of any one of claims 10 to 14, wherein the communication module (226) is configured to receive, via the M-plane protocol, PIM measurement data from the radio unit (210), and
wherein the processor (226) is further configured to analyze the measurement data to determine whether further PIM-related operations are to be initiated.

## Amended claims

### Amended claims in accordance with Rule 137(2) EPC.

**1.** An apparatus (210; O-RU) for managing passive intermodulation, PIM, in a radio access network, the apparatus comprising
an communication module (216) configured to receive control instructions via a management-plane, M-plane, protocol from a network control unit (220; O-DU), the control instructions specifying at least one PIM-related operation;
a processor (214) configured to execute the specified PIM-related operation in accordance with the control instructions; and
the communication module (216) configured to transmit, via the M-plane protocol, data resulting from the executed PIM-related operation to the network control unit (220; O-DU).

**2.** The apparatus (210) of claim 1, wherein the processor (214) is configured to
perform PIM measurements on radio signals at a radio unit in accordance with the control instructions;
update PIM cancellation parameters based on the PIM measurements, and
apply the updated PIM cancellation parameters to a cancellation filter for processing radio signals; and
the communication module (216) is configured to transmit the PIM measurement data and alarms to the network control unit (220).

**3.** The apparatus (210) of claim 1 or 2, wherein the control instructions include a command to configure a PIM alarm comprising one or more threshold values, including at least one inter-modulation-product threshold value, and/or at least one receive-noise-floor-diversity-imbalance threshold value, and/or at least one absolute noise-floor-level threshold value, and
wherein the processor (214) is configured to compare the measured PIM values with its respective threshold value and, upon exceeding the threshold value, cause the communication module (216) to generate and transmit an alarm signal to the network control unit (220).

**4.** The apparatus (210) of any one of the previous claims, wherein the control instructions include a request for PIM measurement capability, and
wherein the communication module (216) is configured to transmit capability information indicating whether the apparatus supports PIM measurement, cancellation, and alarm generation.

**5.** The apparatus (210) of any one of the previous claims, wherein the control instructions include a time plan specifying one or more time windows and/or physical resource blocks in which PIM measurements are permitted, and
wherein the processor (214) is configured to initiate PIM measurements only within those specified time windows and/or physical resource blocks.

**6.** The apparatus (210) of any one of the previous claims, wherein the control instructions include a request to perform a PIM measurement and to return a corresponding report, and wherein the communication module (216) is configured to transmit the report comprising measurement values for an intermodulation array comprising intermodulation products.

**7.** The apparatus (210) of any one of the previous claims, wherein the control instructions include a request to update PIM cancellation parameters, and wherein the processor (214) is configured to perform a new PIM measurement and to recompute the cancellation parameters in response to the request.

**8.** The apparatus (210) of any one of the previous claims, wherein the communication module (216) is further configured to transmit a measurement report including at least one of
an intermodulation, IM, array of measurement values,
an estimated distance to a PIM source,
an indication of potential suppression capacity of the processor (214),
a receive-noise-floor-diversity-imbalance metric, and
a noise-floor-level metric.

**9.** The apparatus (210) of any one of the previous claims, wherein the apparatus (210) is configured to manage PIM in an O-RAN-compliant radio access network, wherein the communication module (216) is configured to receive the control instructions via an O-RAN M-plane protocol from the network control unit (220).

**10.** An apparatus (220; O-DU) for managing PIM in a radio access network, the apparatus comprising
a processor (224) configured to generate control instructions specifying at least one PIM-related operation; and
a communication module (226) configured to send the control instructions via an M-plane protocol to a radio unit (210; O-RU).

**11.** The apparatus (220) of claim 10, wherein the processor (224) is configured to detect degradation in radio performance indicative of PIM, and
generate the control instructions based on the detected degradation.

**12.** The apparatus (220) of claim 10 or 11, further comprising an
artificial intelligence, Al, module configured to analyze radio performance such as BLER, SINR per radio resource block, RB, and to trigger the processor (224) to perform a PIM measurement when the Al module detects degradation indicative of increased PIM levels.

**13.** The apparatus (220) of any of claims 10 to 12, wherein the processor (224) is configured to generate, as the control instruction, a measurement time plan specifying one or more time windows and/or physical resource blocks in which the radio unit is permitted to autonomously perform the PIM-related operation,
and wherein the communication module (226) is configured to transmit the measurement time plan via the M-plane protocol.

**14.** The apparatus (220) of any of claims 10 to 13, wherein the control instructions comprise at least one of
a request to initiate a PIM measurement at the radio unit,
a request to update PIM cancellation parameters at the radio unit,
a configuration of a PIM alarm comprising on one or multiple thresholds, and
a request to report the PIM measurement capability of the radio unit.

**15.** The apparatus (220) of any one of claims 10 to 14, wherein the communication module (226) is configured to receive, via the M-plane protocol, PIM measurement data from the radio unit (210), and
wherein the processor (224) is further configured to analyze the measurement data to determine whether further PIM-related operations are to be initiated.

**1.** An apparatus (210; O-RU) for managing passive intermodulation, PIM, in a radio access network, the apparatus comprising
an communication module (216) configured to receive control instructions via a management-plane, M-plane, protocol from a network control unit (220; O-DU), the control instructions specifying at least one PIM-related operation;
a processor (214) configured to execute the specified PIM-related operation in accordance with the control instructions, wherein the processor (214) is configured to perform PIM measurements on radio signals at a radio unit in accordance with the control instructions, to update PIM cancellation parameters based on the PIM measurements, and to apply the updated PIM cancellation parameters to a cancellation filter for processing radio signals; and
the communication module (216) configured to transmit, via the M-plane protocol, data resulting from the executed PIM-related operation to the network control unit (220; O-DU), wherein the communication module (216) is configured to transmit the PIM measurement data and alarms to the network control unit (220).

**2.** The apparatus (210) of claim 1, wherein the control instructions include a command to configure a PIM alarm comprising one or more threshold values, including at least one inter-modulation-product threshold value, and/or at least one receive-noise-floor-diversity-imbalance threshold value, and/or at least one absolute noise-floor-level threshold value, and
wherein the processor (214) is configured to compare the measured PIM values with its respective threshold value and, upon exceeding the threshold value, cause the communication module (216) to generate and transmit an alarm signal to the network control unit (220).

**3.** The apparatus (210) of any one of the previous claims, wherein the control instructions include a request for PIM measurement capability, and
wherein the communication module (216) is configured to transmit capability information indicating whether the apparatus supports PIM measurement, cancellation, and alarm generation.

**4.** The apparatus (210) of any one of the previous claims, wherein the control instructions include a time plan specifying one or more time windows and/or physical resource blocks in which PIM measurements are permitted, and
wherein the processor (214) is configured to initiate PIM measurements only within those specified time windows and/or physical resource blocks.

**5.** The apparatus (210) of any one of the previous claims, wherein the control instructions include a request to perform a PIM measurement and to return a corresponding report, and wherein the communication module (216) is configured to transmit the report comprising measurement values for an intermodulation array comprising intermodulation products.

**6.** The apparatus (210) of any one of the previous claims, wherein the control instructions include a request to update PIM cancellation parameters, and wherein the processor (214) is configured to perform a new PIM measurement and to recompute the cancellation parameters in response to the request.

**7.** The apparatus (210) of any one of the previous claims, wherein the communication module (216) is further configured to transmit a measurement report including at least one of
an intermodulation, IM, array of measurement values,
an estimated distance to a PIM source,
an indication of potential suppression capacity of the processor (214),
a receive-noise-floor-diversity-imbalance metric, and
a noise-floor-level metric.

**8.** The apparatus (210) of any one of the previous claims, wherein the apparatus (210) is configured to manage PIM in an O-RAN-compliant radio access network, wherein the communication module (216) is configured to receive the control instructions via an O-RAN M-plane protocol from the network control unit (220).

**9.** An apparatus (220; O-DU) for managing PIM in a radio access network, the apparatus comprising
a processor (224) configured to generate control instructions specifying at least one PIM-related operation; and
a communication module (226) configured to send the control instructions via an M-plane protocol to a radio unit (210; O-RU).

**10.** The apparatus (220) of claim 9, wherein the processor (224) is configured to detect degradation in radio performance indicative of PIM, and
generate the control instructions based on the detected degradation.

**11.** The apparatus (220) of claim 9 or 10, further comprising an
artificial intelligence, Al, module configured to analyze radio performance such as BLER, SINR per radio resource block, RB, and to trigger the processor (224) to perform a PIM measurement when the Al module detects degradation indicative of increased PIM levels.

**12.** The apparatus (220) of any of claims 9 to 11, wherein the processor (224) is configured to generate, as the control instruction, a measurement time plan specifying one or more time windows and/or physical resource blocks in which the radio unit is permitted to autonomously perform the PIM-related operation,
and wherein the communication module (226) is configured to transmit the measurement time plan via the M-plane protocol.

**13.** The apparatus (220) of any of claims 9 to 12, wherein the control instructions comprise at least one of
a request to initiate a PIM measurement at the radio unit,
a request to update PIM cancellation parameters at the radio unit,
a configuration of a PIM alarm comprising on one or multiple thresholds, and
a request to report the PIM measurement capability of the radio unit.

**14.** The apparatus (220) of any one of claims 9 to 13, wherein the communication module (226) is configured to receive, via the M-plane protocol, PIM measurement data from the radio unit (210), and
wherein the processor (224) is further configured to analyze the measurement data to determine whether further PIM-related operations are to be initiated.
